# EUROPEAN PATENT APPLICATION

(11) **EP 1 418 346 A1**
(43) Date of publication of application: **12.05.2004**
(21) Application number: 03025451.0
(22) Date of filing: 05.11.2003
(51) Int. Cl.: F16B 19/05, B21J 15/02

(54) **Fixing method and fixing apparatus**

(30) Priority: 07.11.2002 JP 2002323527
(71) Applicant: KAYABA INDUSTRY CO., LTD., Minato-Ku, Tokyo (JP)
(72) Inventor: Nishita, Shinichi, 2-4-1, Hamamatsu-cho Minato-ku Tokyo (JP)
(74) Representative: Grünecker, Kinkeldey, Stockmair & Schwanhäusser Anwaltssozietät

(57) **Abstract**

This invention provides a fixing method for fixing a member to be fixed (5,6) that is placed on a shaft member (1), the fixing method comprising the steps of: forming an annular groove (3) in an outer circumference of the shaft member (1); placing the member to be fixed onto the shaft member (1) until the member to be fixed (5,6) contacts a step portion (2) provided in the shaft member (1); placing a locking member (10) onto the shaft member (1) until the locking member (10) contacts the member to be fixed (5); and caulking the locking member (10) to the shaft member (1) such that one end of the locking member (10) is brought into press contact with the member to be fixed (5) and an inner circumference portion of the other end of the locking member (10) comes into contact with the annular groove (3).

## Description

### FIELD OF THE INVENTION

The present invention relates to a fixing method for fixing a member to be fixed, which is inserted into a shaft member, in an axial direction of the shaft member by using a locking member. The present invention also relates to a fixing apparatus using the fixing method.

### BACKGROUND OF THE INVENTION

With regard to a fixing method for fixing a member to be fixed, which is inserted into a shaft member, between a locking member that is inserted into the shaft member and a step portion of the shaft member and a fixing apparatus using the fixing method, a technique is disclosed in Japanese Utility Model Examined Publication No. Sho 48-13350, for example. This technique is one in which a thread groove is formed in the shaft member, and the member to be fixed is fastened on the shaft member by means of a nut serving as the locking member. A tip of the shaft member is flattened and caulked so that the nut does not loosen. In addition, as disclosed in Japanese Utility Model Application Laid-open No. Sho 60-89422, there is a technique for fixing a member to be fixed, in which a tip of a shaft member is caulked, the tip is made to flare out to the outside, and the member to be fixed is fixed using the flared out portion.

However, per-unit part costs and assembly costs in manufacturing are high with the technique of Japanese Utility Model Examined Publication No. Sho 48-13350. Further, with the technique of Japanese Utility Model Application Laid-open No. Sho 60-89433, there are cases where the tip of the shaft undergoes elastic recovery after caulking and a force for fixing the member to be fixed cannot be generated.

The present invention has been made in order to improve upon the points described above. It is therefore an object of the present invention to provide, at a low cost, a fixing method for fixing a member to be fixed to a shaft member, in which a force for fixing the member to be fixed can be increased, and a fixing apparatus using the fixing method.

### SUMMARY OF THE INVENTION

In order to achieve above object, this invention provides a fixing method for fixing a member to be fixed that is inserted into a shaft member, the fixing method comprising the steps of: forming an annular groove in an outer circumference of the shaft member; inserting the member to be fixed into the shaft member until the member to be fixed contacts a step portion provided in the shaft member; inserting a locking member into the shaft member until the locking member contacts the member to be fixed; and caulking the locking member to the shaft member such that one end of the locking member is brought into press contact with the member to be fixed and an inner circumference portion of the other end of the locking member comes into contact with the annular groove.

This invention further provides a fixing apparatus for fixing a member to be fixed that is inserted into a shaft member, the fixing apparatus comprising: an annular groove formed in an outer circumference of the shaft member; a step portion provided in the shaft member, the bracket portion contacting the member to be fixed; a cylindrical locking member that is inserted into the shaft member, the locking member being caulked and fixed to the shaft member such that one end of the locking member is brought into press contact with the member to be fixed and an inner circumference portion of the other end of the locking member comes into contact with the annular groove.

### BRIEF DESCRIPTION OF THE DRAWINGS

FIG. 1 is a longitudinal sectional view of a fixing structure according to a first embodiment of the present invention.
FIG. 2 is a view showing a fixing method according to the first embodiment of the present invention.
FIG. 3 is a longitudinal sectional view of a fixing structure according to a second embodiment of the present invention.
FIG. 4 is a longitudinal sectional view of a fixing structure according to a third embodiment of the present invention.

### DETAILED DESCRIPTION OF THE PREFERRED EMBODIMENTS

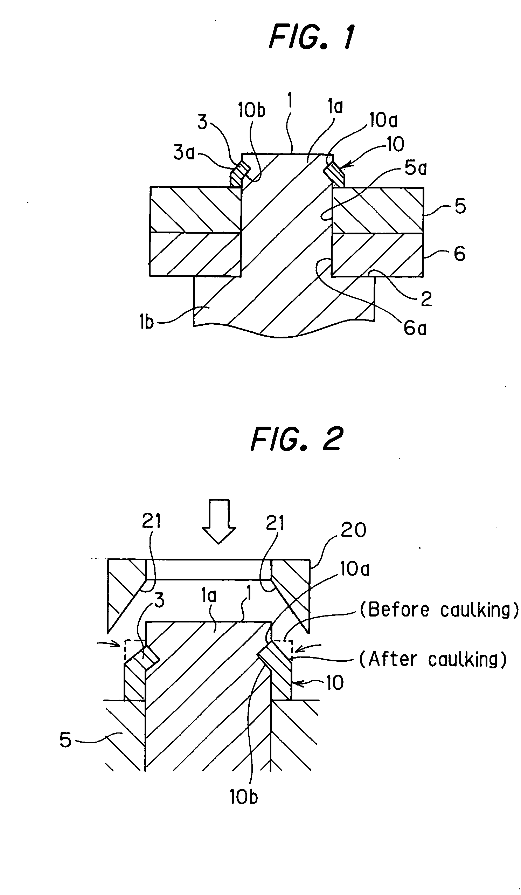

Referring to FIG. 1, a first embodiment of the present invention is explained. A structure of the first embodiment includes: a cylindrical shaft member 1; a cylindrical locking member 10 that is inserted into the shaft member 1; and members to be fixed 5 and 6 which have hole portions for allowing the insertion into the shaft member 1 and are fixed between the shaft member 1 and the locking member 10.

A small diameter portion 1a that has a diameter smaller than that of a main body portion 1b of the shaft member 1 is formed in a tip portion of the shaft member 1. A step portion 2 is formed owing to the difference in diameter between the main body portion 1b and the small diameter portion 1a. The members to be fixed 5 and 6, and the locking member 10 are inserted into the small diameter portion 1a, and the members to be fixed 5 and 6 abut against the step portion 2. The small diameter portion 1a is provided with an annular groove 3 that is formed in a wedge shape in cross section. The length from the step portion 2 to the annular groove 3 is slightly shorter than the length in an axial direction of the members to be fixed 5 and 6 and the locking member 10.

Note that, in addition to the step portion 2 that is formed as described above owing to the diameter difference in the shaft member 1, a step portion formed by coupling another member to the shaft member 1 may also be used as the step portion.

Referring next to FIG. 2, a method of fixing the members to be fixed 5 and 6 to the shaft member 1 is explained. First, hole portions 5a and 6a of the members to be fixed 5 and 6, respectively, are inserted into the small diameter portion 1a of the shaft member 1 and made to contact the step portion 2. The annular locking member 10 is then inserted into the small diameter portion 1a. Next, a force is applied to an upper end 10a of the locking member 10 from an outer circumferential side toward a shaft center side, while the members to be fixed 5 and 6 are pressed against the step portion 2, through the locking member 10, by a die 20 that is discussed hereinafter. The upper end 10a side of the locking member 10 is bent to the shaft member 1 side by this force. An inner circumferential portion 10b of the upper end 10a of the bent locking member 10 enters the inside of the annular groove 3 of the shaft member 1, and the locking member 10 is fitted into the shaft member 1. The members to be fixed 5 and 6 are thus fixed to the shaft member 1 by bending the upper end 10a side of the locking member 10 to the shaft center side to thereby caulk the inner circumferential portion 10b of the upper end 10a of the locking member 10 in the annular groove 3 of the shaft member 1, with the members to be fixed 5 and 6 being pressed against the step portion 2.

The die 20 that bends the upper end 10a of the locking member 10 to the shaft center side is formed in an annular shape to be inserted into the small diameter portion 1a. An inner circumferential surface 21 of a lower end side of the die 20 which contacts the members to be fixed 5 and 6 is formed in a tapered shape so as to push the upper end 10a of the locking member 10 to the shaft center side.

With the present invention, the inner circumferential portion 10b of the upper end 10a of the locking member 10 is fitted within the annular groove 3 in a state where the die 20 pushes the members to be fixed 5 and 6 against the step portion 2 through the locking member 10. That is, the inner circumferential portion 10b is fitted in a state where the members to be fixed 5 and 6 undergo an elastic deformation toward the step portion 2 side. After caulking by using the die 20, a restoring force acts to return the members to be fixed 5 and 6 to their original shape, thus causing the locking member 10 to be pushed upward in FIG. 1. However, the upper end 10a of the locking member 10 is fitted within the annular groove 3, and therefore the locking member 10 receives a reaction force acting in a downward diagonal direction from the annular groove 3 having the wedge-shaped cross section. Thus, the locking member 10 does not pull away from the shaft member 1. As a result, the members to be fixed 5 and 6 are fixed to the shaft member 1 while being applied with a compressive force in the axial direction between the locking member 10, which is fitted into the annular groove 3, and the step portion 2. The force for fixing the members to be fixed 5 and 6 therefore becomes larger, and it becomes possible to firmly fix the members to be fixed 5 and 6.

With the present invention, the members to be fixed 5 and 6 can be fixed by the simple operations explained up to this point. Compared to conventional fixing methods and structures in which the shaft tip undergoes caulking, it is possible to fix the members to be fixed 5 and 6 more firmly to the shaft member 1. That is, the step portion 2 is provided in the shaft member 1, and the members to be fixed 5 and 6 are inserted so as to abut against the step portion 2. Next, the locking member 10 is inserted into the shaft member 1 so as to push the members to be fixed 5 and 6 against the step portion 2. In addition, the annular groove 3 is provided in the shaft member 1 into which the locking member 10 is inserted. The inner circumferential portion 10b of the upper end 10a of the locking member 10 is then bent to fit into the annular groove 3 while the members to be fixed 5 and 6 are pushed against the step portion 2. The members to be fixed 5 and 6 can thus be firmly fixed to shaft member 1 by this method. Accordingly, compared to conventional fixing methods and fixing structures that utilize a nut, it is not necessary to provide a thread groove in a wide area of the nut or the shaft member, and consequently a substantial cost reducing effect is obtained.

Note that the cross section of the annular groove 3 is set to a wedge shape with the aim of increasing a contact surface area between the upper end 10a of the locking member 10 and a groove surface 3a of an upper side in FIG. 1 of the annular groove 3. That is, a frictional force becomes larger if the contact surface area increases. The force acting on the locking member 10 in the downward diagonal direction from the annular groove 3, that is, the force acting to push out the locking member 10 from the annular groove 3, can be countered. It is possible to maintain a further stable fixed state. It is should be noted that the cross section of the annular groove 3 may also be U-shape, and may also take on other shapes.

Further, although the step portion 2 is formed in this embodiment based on different diameters in the shaft member 1, the step portion 2 may also be formed in the shaft member 1 by fixing another member to an outer circumferential surface of the shaft member 1. In addition, the effect of the present invention, with which the members to be fixed 5 and 6 are firmly fixed to the shaft member 1, is maintained even if the locking member 10 described above is provided on both sides of the members to be fixed 5 and 6 as a substitute for the step portion, depending upon the circumstances.

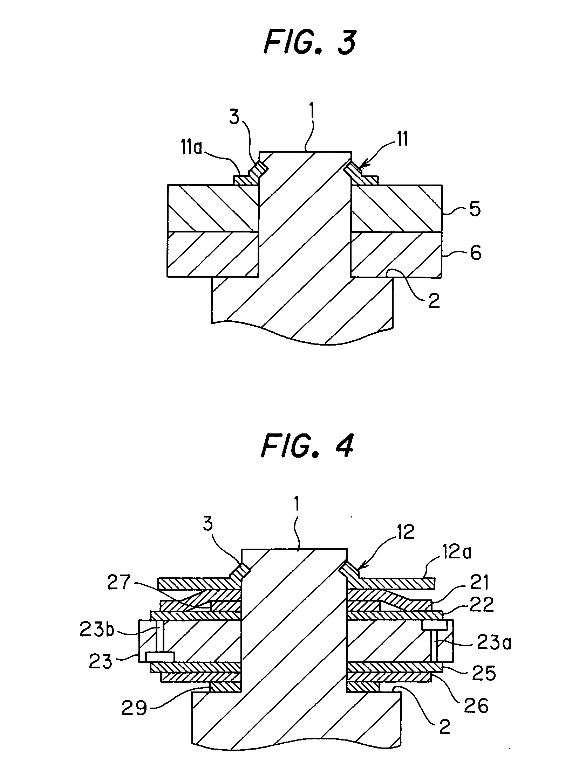

Referring to FIG. 3, a second embodiment is explained next. In the second embodiment, the locking member 10 of the first embodiment is changed to a locking member 11 provided with a collar 11a on the side of the member to be fixed. Therefore, the actions and effects of the first embodiment are achieved. Further, in this case, the contact surface area between the member to be fixed 5 and the locking member 11 becomes larger by providing the collar 11a, and a frictional force between the member to be fixed 5 and the locking member 11 also increases. Rotation of the member to be fixed 5 with respect to the locking member 11 is thus well prevented. In addition, the collar 11 a serves to bear a force acting in the downward diagonal direction in the figure from the annular groove 3 of the shaft member 1, that is, a force acting on the locking member 11 to push the locking member 11 from the annular groove 3. It is therefore possible to well prevent the locking member 11 from pulling away from the shaft member 1. Consequently, a further stable fixed state can be maintained.

Referring to FIG. 4, a third embodiment is explained lastly. FIG. 4 is a sectional view of the present invention, which is applied to a piston portion of a shock absorber or the like. That is, a member to be fixed includes a piston 23 provided with orifices 23a and 23b, valve bodies 22 and 25 that control opening and closing of the orifices 23a and 23b, valve springs 21 and 26 that urge the valve bodies 22 and 25 to the piston 23 side, and upper and lower spacers 27 and 29 for positioning. In this case, the shaft member 1 becomes a piston rod. It should be noted that shock absorbers and the like are well known members, and therefore a detailed description of each member is not given here. However, when the piston 23 moves upward and downward in the figure within a cylindrical body that is not shown, a working fluid within the cylindrical body passes through the orifices 23a and 23b, and resistance is imparted against movement of the working fluid.

The locking member 12 is provided with a collar 12a obtained by enlarging the collar 11a of the locking member 11 of the second embodiment in a circumferential direction in order to press on the upper valve spring 21. The member to be fixed can thus be firmly fixed to the shaft member in this embodiment. Consequently, a large effect is particularly expected under an environment where a fluid pressure of the working fluid is applied to the member to be fixed.

Therefore, according to the present invention, it is possible to easily and firmly fix the member to be fixed to the shaft member, and fixing can be performed at a low cost compared to the conventional methods where a nut is used. A substantial cost reducing effect is thus achieved. Further, compared to the conventional fixing methods and structures where the shaft tip is caulked, it becomes possible to fix the member to be fixed more firmly to the shaft member.

Furthermore, the cross sectional shape of the annular groove is set to a wedge shape. The contact surface area between the upper end of the locking member and the groove surface of the annular groove thus increases, and the resultant frictional force also becomes larger. The force acting on the locking member from the annular groove side to push out the locking member, can be thus overcome, and the fixed state can be maintained stably.

In addition, the locking member is a cylindrical body having a collar in the end portion that contacts the member to be fixed, and the contact surface area between the member to be fixed and the locking member consequently becomes larger owing to the collar. The frictional force between the member to be fixed and the locking member also increases, and therefore rotation of the member to be fixed with respect to the locking member can be well prevented. Further, the collar serves to bear the force acting on the locking member from the annular groove of the shaft member to push the locking member out from the annular groove, and therefore it is possible to well prevent the locking member from pulling away from the shaft member. Consequently, it becomes possible to maintain a further stable fixed state.

Further, a piston, a valve body, or the like can be firmly fixed to a piston rod when applying the fixing structure of the present invention to a hydraulic shock absorber. Therefore a particularly large effect is expected under an environment where the hydraulic pressure of operating oil is applied to the piston, the valve body, or the like.

## Claims

1. A fixing method for fixing a member to be fixed (5) that is inserted into a shaft member (1), the fixing method comprising the steps of:
forming an annular groove (3) in an outer circumference of the shaft member (1);
inserting the member to be fixed (5) into the shaft member (1) until the member to be fixed (5) contacts a step portion (2) provided in the shaft member (1);
inserting a locking member (10) into the shaft member (1) until the locking member (10) contacts the member to be fixed (5); and
caulking the locking member (10) to the shaft member (1) such that one end of the locking member (10) is brought into press contact with the member to be fixed (5) and an inner circumference portion of the other end of the locking member (10) comes into contact with the annular groove (3).

2. The fixing method according to claim 1, wherein the step of the caulking comprises applying a pressing force toward an inner circumference side from an outer circumference side of an end portion of the locking member (10) by using an annular die having a tapered inner circumferential surface.

3. A fixing apparatus for fixing a member (5) to be fixed that is inserted into a shaft member (1), the fixing apparatus comprising:
an annular groove (3) formed in an outer circumference of the shaft member;
a step portion (2) provided in the shaft member (1), the step portion contacting the member to be fixed;
a cylindrical locking member (10) that is inserted into the shaft member (1), the locking member (10) being caulked and fixed to the shaft member (1) such that one end of the locking member (10) is brought into press contact with the member to be fixed (5) and an inner circumference portion of the other end of the locking member (10) comes into contact with the annular groove (3).

4. The fixing apparatus according to claim 3, wherein the annular groove (3) has a wedge-shaped cross section.

5. The fixing apparatus according to claim 3, wherein the locking member (10) is a cylindrical body having a collar (11a) in an end portion that contacts the member to be fixed (5).
